# FASCICULE DE BREVET EUROPEEN

(11) **EP 3 542 305 B1**
(45) Date de publication et mention de la délivrance du brevet: **30.12.2020**
(21) Numéro de dépôt: 17804841.9
(22) Date de dépôt: 17.11.2017
(51) Int. Cl.: G06K 9/00, G06K 9/22

(54) **PROCEDE DE COLLECTE DE DONNEES OPERATIONNELLES D'AERONEF**
VERFAHREN ZUM SAMMELN VON BETRIEBSFLUGZEUGDATEN
METHOD FOR COLLECTING OPERATIONAL AIRCRAFT DATA

(30) Priorité: 17.11.2016 FR 1661163
(43) Date de publication de la demande: 25.09.2019
(73) Titulaire: Safran Electronics & Defense, 75015 Paris (FR); Safran Helicopter Engines, 64510 Bordes (FR)
(72) Inventeur: COUTURIER, Emmanuel, 75015 Paris (FR); FANTON, Nicolas, 75015 Paris (FR); LIPARI, Nicolas, 75015 Paris (FR); LAMAZERE, Fabien, 64510 Bordes (FR); THERMY, François, 64510 Bordes (FR); GASCHIGNARD, Emmanuel, 64510 Bordes (FR)
(74) Mandataire: Lavialle, Bruno François Stéphane
(86) Numéro de dépôt international: PCT/EP2017/079620
(87) Numéro de publication internationale: WO 2018/091663

(56) Documents cités:
- WO-A2-2006/011141
- FR-A1- 2 952 257
- FR-A1- 3 022 418
- US-A1- 2003 138 146
- US-A1- 2013 204 487
- US-B1- 8 892 273

## Description

La présente invention concerne le domaine de la collecte de données opérationnelles d'aéronef.

### ARRIERE PLAN DE L'INVENTION

Il est nécessaire de collecter des données opérationnelles des aéronefs pour permettre une traçabilité des aéronefs sous différents aspects.

Parmi les données opérationnelles collectées se trouvent, des données d'identification de l'aéronef, des données de configuration de l'aéronef, des données relatives à l'utilisation de l'aéronef, par exemple des informations de vols, des informations relatives à l'activité aérienne de l'aéronef comme le temps d'utilisation d'équipements de l'aéronef, ou des résultats de mesures réalisées par l'instrumentation de l'aéronef (par ex. dépassements de seuils de température, de puissance, température de l'air, vitesse air, vitesse de rotation, niveau de carburant, de couple...).

Toutes ces données opérationnelles sont indiquées à l'arrêt de l'aéronef par le ou les écrans de l'avionique de l'aéronef, par exemple le ou les écrans de « l'afficheur de contrôle de l'aéronef et de ses moteurs » connu sous l'acronyme VEMD pour « véhiculé and engine multifunction display ».

Ces données sont généralement inscrites manuellement par l'intervenant ce qui peut entraîner des erreurs de collecte qui induisent des problèmes de traçabilité.

Les données collectées dans ces rapports de vol peuvent varier d'un intervenant à un autre.

Ainsi l'exhaustivité et la fiabilité des données collectée n'est en rien garantie. Le partage de données fiables entre les intervenants s'en trouve compromis.

Des systèmes de collecte de données ont été prévus pour résoudre ces inconvénients.

US8892273B1 divulgue une méthode pour fournir et transférer des données aéronautiques. Une représentation optique des données aéronautiques est générée et affichée à bord de l'avion. La représentation optique est générée à l'aide d'un appareil portatif qui remplit automatiquement tous les formulaires que l'utilisateur devrait autrement remplir manuellement.

US2013/204487A1 divulgue une méthode de maintenance fournie à un aéronef dont au moins certains des systèmes de l'aéronef produisent des indices visuels indiquant l'état du système de l'aéronef. Les systèmes de l'aéronef sont capables de créer des rapports sommaires à stocker dans l'aéronef ou à envoyer à un système distant.

FR3022418A1 divulgue une méthode pour communiquer des informations d'un système avionique à un terminal distant. Le procédé comprend les étapes suivantes: production d'au moins une image représentative de ladite information; affichage de cette image sur un écran de visualisation; acquisition de l'image affichée sur l'écran de visualisation au moyen d'un terminal mobile; et transmission des données extraites de ladite image par le terminal mobile à un terminal distant.

### OBJET DE L'INVENTION

Un objet de la présente invention est de fournir un procédé de collecte de données permettant de résoudre tout ou partie des inconvénients précités.

### RESUME DE L'INVENTION

A cette fin, il est proposé selon l'invention, un procédé de collecte de données opérationnelles d'un aéronef, cet aéronef comportant au moins un écran d'affichage de données opérationnelles de l'aéronef, le procédé étant caractérisé en ce que :
- à l'aide d'un terminal mobile doté d'au moins un capteur optique, on réalise l'acquisition d'images dudit écran d'affichage de manière à ce que certaines au moins des images acquises représentent des données opérationnelles affichées sur l'écran d'affichage ;
- à l'aide d'un module de reconnaissance optique de caractères (OCR) associé audit terminal mobile, on identifie dans les images acquises des chaînes de caractères chacune représentative d'une desdites données opérationnelles affichées sur l'écran d'affichage ;
- à l'aide d'un module de génération de rapport et desdites chaînes de caractères identifiées, on génère un rapport électronique contenant certaines au moins desdites données opérationnelles de l'aéronef.

L'invention facilite la tâche de collecte de données par l'intervenant.

Le module de reconnaissance optique de caractères OCR associé audit terminal mobile, permet de se passer de saisie manuelle de données lors de la génération du rapport de vol à bord de l'aéronef. On évite ainsi, certaines erreurs dans la collecte liées à une saisie manuelle. Le procédé selon l'invention permet un gain de temps.

Contrairement à un dispositif de collecte de données qui s'interfacerait avec l'électronique de l'aéronef pour collecter ces données via un flux électronique, le procédé selon l'invention ne nécessite pas d'adapter l'électronique de l'aéronef. Le procédé selon l'invention est ainsi sans impact en termes de certification de l'aéronef puisqu'il n'implique pas de le modifier.

En outre, l'adaptabilité du procédé à différents types d'aéronefs est particulièrement avantageuse et économique.

Comme on le verra ci-après dans la description détaillée, les données / informations collectées grâce au procédé selon l'invention peuvent être de nombreux types.

Ainsi, les données opérationnelles de l'aéronef sont par exemple des heures de vol, des données relatives aux cycle(s) moteur(s), ou des résultats de contrôle santé de moteur(s), ou des données de configuration de l'aéronef collectées. Ces données opérationnelles sont acquises via l'acquisition d'image(s) de l'écran et via une reconnaissance de caractères appliquée à cette / ces image(s).

Dans un mode de réalisation particulier, le terminal mobile comporte aussi un dispositif d'acquisition d'au moins une information d'identification de l'aéronef qui est/sont portée(s) par l'aéronef.

Dans ce mode, le terminal mobile est agencé :
- pour d'une part acquérir des données opérationnelles via l'acquisition d'image(s) de l'écran et l'application d'une reconnaissance de caractères sur cette/ces images ; et
- pour d'autre part acquérir des informations d'identification portées par l'aéronef (typiquement des informations stockées sur des étiquettes et/ou cryptogrammes optiques fixées sur l'aéronef ou affichés sur un / des écran(s) de l'aéronef).

Les données opérationnelles sont généralement des variables qui évoluent au cours de l'utilisation de l'aéronef (par exemple le temps de vol) alors que les informations d'identification acquises à l'aide du dispositif d'acquisition du terminal sont généralement des données figées qui représentent par exemple l'identité de l'aéronef ou une configuration technique de l'aéronef (par exemple l'identifiant d'un équipement de l'aéronef, une combinaison particulière d'équipements de l'aéronef ou une version d'équipement).

Le procédé permet d'acquérir des données opérationnelles, des informations d'identification de l'aéronef et/ou des informations/données relatives à l'intervenant qui collecte les données opérationnelles. Toutes ces données opérationnelles, informations d'identification et informations / données relatives à l'intervenant sont préférentiellement consignées dans un même rapport électronique.

Grâce au procédé selon l'invention le temps nécessaire à la génération d'un rapport électronique complet est particulièrement réduit (idéalement inférieur à 5 minutes).

Selon un mode de réalisation préférentiel du procédé selon l'invention, on réalise successivement l'acquisition de données opérationnelles délivrées via ledit écran et d'au moins une information d'identification de l'aéronef acquise à l'aide d'un dispositif d'acquisition, ainsi qu'une ou plusieurs informations de configuration de l'aéronef (par exemple une information de configuration du ou des moteur(s) de l'aéronef, une information de configuration d'une unité fonctionnelle de l'aéronef (LRU)) et on mémorise ces données opérationnelles et informations d'identification acquise successivement dans le même rapport électronique.

Le fait d'acquérir dans un unique processus non interruptible (Rapport de vol) d'une part une image de l'écran où sont affichées des données opérationnelles et d'autre part des informations d'identification de l'aéronef qui décrivent l'identité de l'aéronef et/ou la configuration de tout ou partie de l'aéronef est avantageux car cela permet de fiabiliser les données et informations collectées et enregistrées au niveau du rapport. On réduit ainsi le risque que le rapport électronique contienne des données et informations collectées à des instants distincts et provenant de sources éparses non cohérentes entre elles. La fiabilité du rapport est ainsi améliorée.

Préférentiellement et selon ce dernier mode de réalisation, successivement à ladite acquisition desdites données opérationnelles et de ladite information d'identification de l'aéronef, on réalise l'acquisition d'une image d'intervenant utilisant le terminal mobile et on mémorise cette image d'intervenant dans le rapport électronique.

Ce mode de réalisation améliore la traçabilité de collecte de données puisque l'on sait reconnaître, par son image enregistrée dans le rapport, l'intervenant qui a procédé à l'acquisition des données inscrites dans le rapport. Toutes ces qualités favorisent une meilleure traçabilité et l'exhaustivité des données. En améliorant cette traçabilité et en validant l'exhaustivité, l'invention permet d'améliorer la qualité de l'information de maintenance de l'aéronef et au final la sûreté de l'aéronef.

Pour favoriser cette exhaustivité de collecte de données, le procédé de collecte selon l'invention peut comprendre une étape de vérification de l'image obtenue à l'aide dudit capteur optique. Cette étape de vérification peut consister à s'assurer que cette image obtenue représente bien l'intégralité d'un écran d'affichage donné. Si tel est le cas cette image obtenue est considérée comme étant une image acquise à prendre en compte par le module de reconnaissance optique de caractères. Dans le cas contraire, si une portion seulement de l'écran est représentée dans l'image acquise donnée ou si l'image est trouble (caractères difficilement reconnaissables), alors il peut être demandé à l'intervenant de générer une nouvelle image de cet écran d'affichage et cela jusqu'à ce qu'une image de la totalité de cet écran soit obtenue. Dans ce mode de réalisation, seule une image obtenue présentant la totalité d'un écran d'affichage donné est considérée comme étant une image acquise de l'écran devant être traitée par le module de reconnaissance optique.

Par ailleurs, toujours pour favoriser l'exhaustivité de la collecte des données, le procédé s'assure que la liste des écrans ayant fait l'objet d'une reconnaissance optique est complète.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- la figure 1 illustre un poste de pilotage d'un aéronef comportant plusieurs écrans d'affichage de données opérationnelles de l'aéronef ;
- la figure 2 illustre une première étape du procédé selon l'invention dans laquelle l'intervenant utilise un terminal mobile pour commencer à acquérir des informations d'identification de l'aéronef et/ou des informations de configuration de l'aéronef et des images d'écrans de l'aéronef via un capteur optique intégré au terminal mobile ;
- la figure 3 illustre une seconde étape du procédé selon l'invention où l'intervenant réalise l'acquisition d'une image d'un écran, cette image étant affichée sur un écran de visualisation du terminal mobile ;
- la figure 4a illustre une première alternative où l'utilisateur collecte au moins une information d'identification de l'aéronef (par exemple une information d'identité de l'aéronef ou une information de configuration de l'aéronef) en réalisant l'acquisition optique d'une information inscrite sur un cryptogramme (code image matriciel de type QRcode ou flashcode ou tout autres marqueurs optiques adaptés) fixé, dans le poste de pilotage, à proximité des écrans d'affichage ;
- la figure 4b illustre une seconde alternative où l'utilisateur collecte au moins une information d'identification de l'aéronef (par exemple une information d'identité de l'aéronef ou une information de configuration de l'aéronef) en réalisant une acquisition d'une information inscrite sur un support électronique, tel une étiquette électronique fixée sur le tableau de bord et dotée de moyens de communication en champ-proche ;
- la figure 5 illustre l'identification dans l'image acquise de chaînes de caractères représentatives des données opérationnelles affichées sur l'écran de l'aéronef ;
- la figure 6 illustre un exemple d'une des pages d'un rapport générée par le module de génération de rapport intégré au terminal mobile ;
- la figure 7 illustre l'étape de signature du rapport lors de laquelle, après avoir validé manuellement les données saisies à l'aide du terminal mobile, une photographie de l'intervenant est acquise par le terminal mobile et une reconnaissance biométrique (Par ex. faciale, empreintes digitales,...) de l'intervenant est mise en œuvre pour valider la signature du rapport par l'intervenant.

### DESCRIPTION DETAILLEE DE L'INVENTION

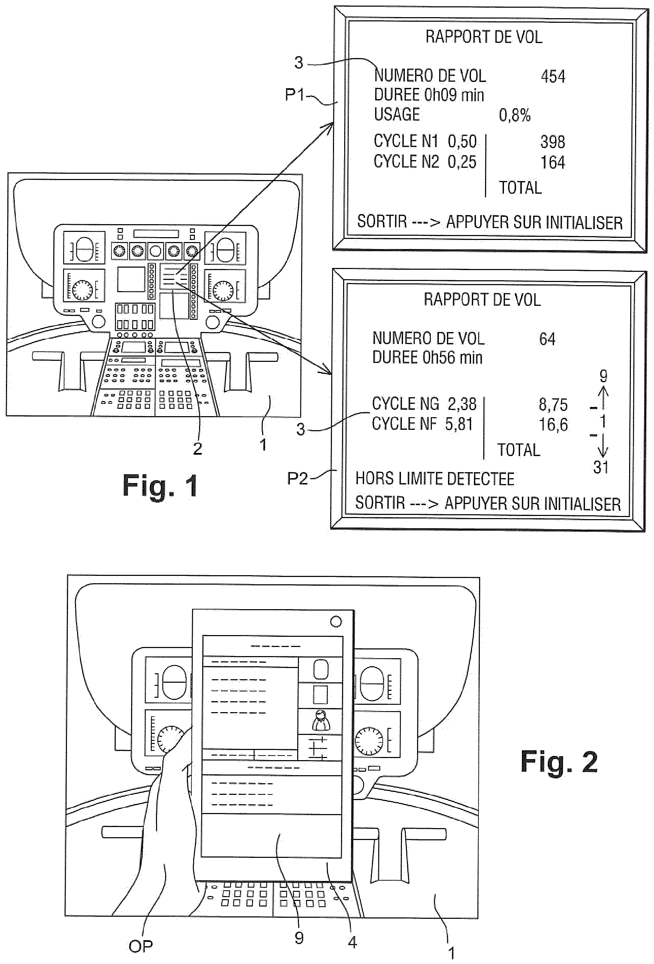

Comme indiqué précédemment, l'invention porte sur un procédé de collecte de données opérationnelles d'un aéronef 1. Le poste de pilotage de l'aéronef est illustré sur les figures 1, 2, 3, 4a, 4b, 5 et 7.

Cet aéronef comporte au moins un écran d'affichage 2 de données opérationnelles 3 de l'aéronef. En l'occurrence, l'aéronef 1 représenté est un hélicoptère doté de plusieurs écrans d'affichage disposés sur le tableau de bord. Chacun de ces écrans 2 est commandé par des moyens de sélection (non détaillés), préférentiellement actionnables manuellement par l'intervenant OP, afin de sélectionner pour chaque écran 2, la page P1, P2 de données opérationnelles à afficher.

Comme illustré sur les différentes figures, les données opérationnelles relatives à l'aéronef peuvent comporter :
- A) des données d'identification de l'aéronef, par exemple, le type d'aéronef (hélicoptère), le modèle d'aéronef (par ex. H225), son numéro de série ou autre identifiant de l'aéronef ;
- B) des données de configuration de l'aéronef, par exemple le type / numéros de série de moteur ou rotor équipant l'aéronef, le type / numéro de série d'interface homme machine, des identifiants de pièces ou systèmes de l'aéronef (ces données de configuration peuvent aussi être inscrites sur un support de type cryptogramme ou électronique porté par l'aéronef et lisible via le dispositif d'acquisition intégré au terminal mobile) ;
- C) données relatives à l'utilisation de l'aéronef, par exemple :
   - des informations relatives à un ou plusieurs vols donnés comme, la nature du vol (Vol VIP, d'essai...), le numéro de vol (flight number) l'heure / date de commencement de vol (Departure time, flight start time), l'heure / date de fin du vol (flight end time), le temps de vol (Operating time / Flight time), lieu de départ du vol (Flight start place), lieu d'arrivée du vol (Flight end place) ;
   - des informations relatives à l'activité aérienne (Aerial activity) pendant le vol comme : le temps d'utilisation d'équipements de l'aéronef, des conditions de fonctionnement particulières détectées par l'instrumentation de l'aéronef, par exemple des dépassements de seuils de température ou surchauffes, des dépassements de charge mécanique (over load), et toute information de fonctionnement utile pour réaliser une opération de maintenance curative, prédictive, préventive ou conditionnelle (les heures de vol, des données relatives aux cycles moteur(s), ou des résultats de contrôle santé de moteur(s), temps d'usage d'un générateur de gaz, un rendement de fonctionnement constaté d'un ou plusieurs équipements, taux d'usure d'une pièce...) .

Toutes ces données opérationnelles sont affichées à l'arrêt de l'aéronef par le ou les écrans de l'avionique de l'aéronef tels des écrans de « l'afficheur de contrôle de l'aéronef et de ses moteurs » connu sous l'acronyme VEMD pour « vehicule and engine multifunction display ». On peut avoir un écran par catégorie d'information. Par exemple un écran peut être dédié à l'affichage d'informations d'écarts de fonctionnement d'éléments de l'aéronef remontées par le FADEC (Full Authority Digital Electronic Control).

Bien entendu les données opérationnelles 3 collectées à l'aide du procédé selon l'invention peuvent comprendre bien d'autres données.

Le procédé de collecte de données opérationnelles selon l'invention est essentiellement caractérisé en ce que :
- à l'aide d'un terminal mobile 4 doté d'au moins un capteur optique (typiquement une caméra arrière du terminal mobile), on réalise l'acquisition d'images 5 dudit écran d'affichage 2 de manière à ce que certaines au moins des images acquises représentent des données opérationnelles 3 affichées sur l'écran d'affichage 2;
- à l'aide d'un module de reconnaissance optique de caractères OCR associé / intégré au terminal mobile 4, on identifie dans les images acquises 5 des chaînes de caractères C1, C2 chacune représentative d'une desdites données opérationnelles 3 affichées sur l'écran d'affichage 2 ; et
- à l'aide d'un module de génération de rapport et desdites chaînes de caractères identifiées C1, C2, on génère un rapport électronique 6 contenant certaines au moins desdites données opérationnelles 3 de l'aéronef 1.

Comme les données opérationnelles 3 sont généralement affichées en fin de vol via des écrans de l'avionique tels des écrans du VEMD, le procédé selon l'invention est essentiellement mis en œuvre lorsque l'aéronef est à l'arrêt, moteurs /turbines stoppés et rotors immobiles.

Ledit terminal mobile 4 comporte un dispositif d'acquisition d'une information d'identification ID de l'aéronef portée par l'aéronef.

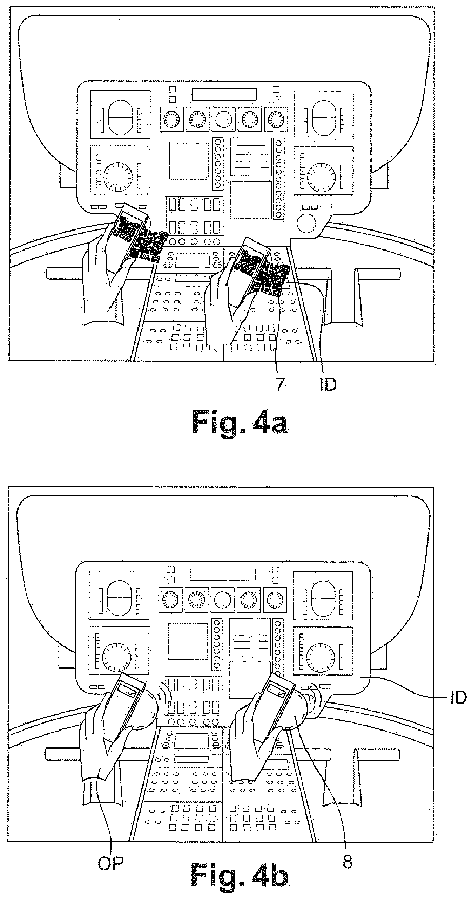

Ce dispositif d'acquisition (non représenté sur les figures est, dans cet exemple, intégré dans le terminal mobile) permet d'acquérir une identification ID de l'aéronef et/ou de configuration de l'aéronef portée par l'aéronef. Ce dispositif d'acquisition est par exemple un capteur optique du terminal 4 adapté à capter une image d'une marque d'identification ou d'un cryptogramme visuel 7 propre à l'aéronef (potentiellement propre à l'aéronef dans une configuration matérielle donnée à l'instant t, c'est-à-dire équipé de certains sous ensemble matériels, optionnels ou non) et porté par ce dernier. Un tel cryptogramme visuel 7 est illustré de manière schématique sur la figure 4a.

Ce dispositif d'acquisition peut comporter un ensemble de moyens de communication en champ-proche NFC (Near Field Communication) tels que des moyens RFID (Radio Frequency Identification), ou autre, agencés pour lire l'information d'identification ID et /ou de configuration de l'aéronef inscrite sur une étiquette électronique 8 portée par l'aéronef. Une telle étiquette électronique 8 est illustrée de manière schématique sur la figure 4b.

Le module de génération de rapport est agencé pour que le rapport électronique 6 qu'il génère, associe cette information d'identification ID de l'aéronef avec les données opérationnelles 3 de l'aéronef contenues dans le rapport.

Pour améliorer la fiabilité de la collecte via le procédé selon l'invention, il est avantageux de collecter l'information d'identification en utilisant un support de cette information ID particulier et par exemple distinct de l'écran d'affichage 2.

Ceci permet de bien vérifier l'identification de l'aéronef via une source d'information autre que les seuls caractères affichés sur l'écran d'affichage. Une double source d'information d'identification ID peut être utilisée pour vérifier que l'identifiant ID affiché sur l'écran 2 est bien le même que celui obtenu à l'aide du support d'information (étiquette ou cryptogramme).

On note que ce support d'information est choisi parmi une marque d'identification ou un cryptogramme visuel 7 ou une étiquette 8 dotée de moyens de communication en champ-proche ou par l'affichage d'un cryptogramme optique sur un écran.

L'étape de récupération de données par un protocole NFC ou un cryptogramme optique garantit la proximité du terminal mobile vis-à-vis du véhicule lors de l'acquisition de l'information ID par le terminal 4. Ceci limite le risque d'interaction d'agent extérieur lors de cette acquisition.

Le terminal mobile 4 peut être par exemple un smartphone, ou une tablette tactile ou un ordinateur ou tout autre dispositif informatique mobile. Le terminal 4 comprend en outre au moins un processeur et au moins une mémoire qui sont reliés à un écran de visualisation 9 et au capteur optique. Le terminal mobile est ainsi adapté à la mise en œuvre du procédé.

L'écran de visualisation 9 du terminal est agencé pour :
- d'une part visualiser les images acquises 5 par le capteur optique pendant cette acquisition; et pour
- d'autre part afficher le rapport électronique 6 à l'attention d'un intervenant OP.

Le terminal mobile 4 comporte aussi des moyens de signature pour permettre à l'intervenant OP visualisant le rapport électronique 6, éventuellement de le modifier, puis de le signer, si il lui convient.

Ces moyens de signature peuvent être associés à un dispositif d'authentification biométrique de l'intervenant, la signature du rapport électronique par l'intervenant étant alors autorisée uniquement si cet intervenant OP a été préalablement identifié par le dispositif d'authentification biométrique.

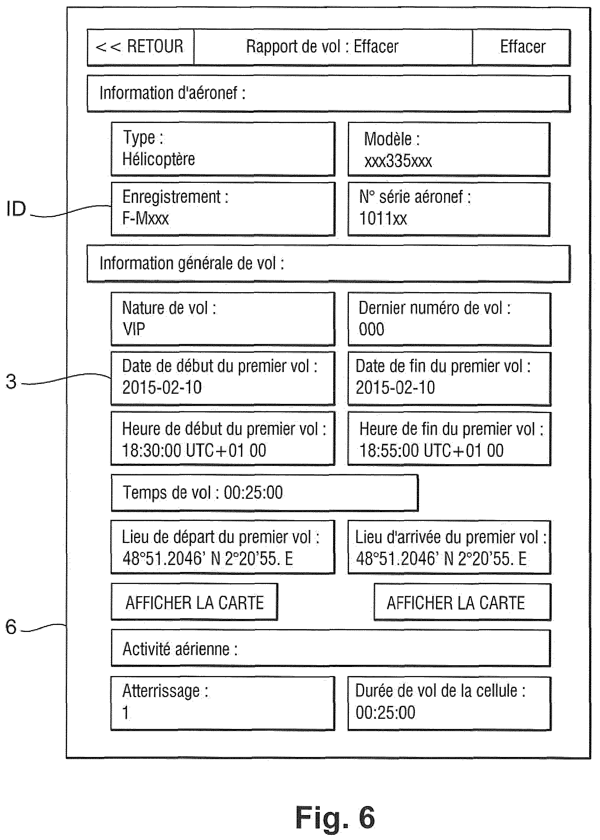

Dans l'exemple illustré en particulier par la figure 6, le dispositif d'authentification est un dispositif de reconnaissance faciale couplé à une caméra intégrée au terminal mobile. Cette caméra est une caméra frontale implantée sur une première face du terminal mobile qui est opposée à une seconde face du terminal mobile où se trouve le capteur optique permettant l'acquisition des images d'écran 2.

L'identification de l'intervenant OP et l'ID / la configuration de l'aéronef est associée à un certain nombre de droits autorisant ou non l'intervenant à générer certaines portions du rapport 6. Avantageusement cette double identification peut ouvrir également des droits d'accès à d'autres services type CRM (Customer relation management), communauté digitale ou autre.

Selon que l'intervenant est un pilote, un mécanicien ou un intervenant de maintenance ou un contrôleur, le terminal 4 peut adapter la procédure de génération du rapport selon la fonction de l'intervenant.

Comme on le voit en particulier sur la figure 6, le terminal mobile peut être relié fonctionnellement à une base de données BD1 contenant plusieurs modèles de rapports électroniques prédéterminés. Chaque modèle donné de rapport correspond à un type d'aéronef / configuration donné lui-même identifiable via l'information d'identification ID de cet aéronef.

Le module de génération de rapport est agencé pour qu'à réception de l'information d'identification ID de l'aéronef dont on veut collecter des données, il obtient de la base de données BD1 un modèle donné de rapport électronique correspondant à cet aéronef dans sa configuration donnée.

Le rapport électronique généré 6 par le module de génération de rapport est généré à partir du modèle de rapport obtenu de la base de données BD1.

Comme le modèle de rapport est spécifiquement adapté à l'aéronef identifié, ce rapport contient des champs de données 3 à remplir qui se présentent dans l'ordre où ils sont affichés sur les différentes pages P1, P2 affichée sur les écrans 2. Les tâches de reconnaissance optique et de visualisation des données acquises en sont facilitées.

Les champs à remplir dans ce modèle peuvent être affichés ou non en fonction du profil de l'intervenant.

Comme indiqué précédemment, l'aéronef comporte des moyens de sélection de la page à afficher sur ledit écran d'affichage 2, parmi un ensemble prédéterminé de pages affichables P1, P2. Comme illustré sur la figure 1, chaque page donnée affichée P1, P2 contient un jeu de données opérationnelles 3 de l'aéronef.

Le terminal mobile 4 peut aussi être relié à une base de données BD2 de scénarios de collecte de données 3. Chaque scénario de collecte donné de cette base BD2 correspondant à un type d'aéronef donné lui-même identifiable via l'information d'identification ID de cet aéronef.

Le module de génération de rapports est agencé pour qu'à réception de l'information d'identification ID de l'aéronef, il obtienne de la base de données BD2 un scénario de collecte de données correspondant à cet aéronef.

Puis, en réponse à ce scénario de collecte, le module de génération de rapport émet des instructions à l'attention de l'intervenant OP pour que l'intervenant sélectionne la page à afficher sur ledit au moins un écran d'affichage 2.

Le terminal acquiert des images 5 de chacune des pages P1, P2 successivement affichées sur l'écran 2. Ces images sont par la suite utilisées pour générer le rapport 6.

Par cette fonctionnalité, l'intervenant suit un scénario prédéterminé propre à l'aéronef 1 et à sa configuration. Ce scénario le guide pour afficher une séquence prédéterminée de pages P1, P2 sur l'écran 2 et pour en acquérir les images permettant d'obtenir un jeu prédéterminé de données opérationnelles.

Le risque d'oubli de pages ou de données à collecter est ainsi limité. Si l'acquisition d'une page n'est pas réalisée suivant le scénario, le module de génération de rapport peut le signaler à l'intervenant et éventuellement l'inscrire dans le rapport pour attirer son attention.

Dans le cas où l'aéronef comporte plusieurs écrans d'affichage, le scénario de collecte de données correspondant à cet aéronef est prévu pour que, lorsqu'il est exécuté, il induise l'émission d'instructions d'acquisition d'images de chacun de ces écrans l'un après l'autre. Les instructions données à l'intervenant via le terminal peuvent être visuelles via l'écran 9 et/ou sonores via un haut-parleur du terminal 4.

Chacune de ces bases BD1, BD2 de modèles de rapports ou de scénarios de collecte de données peut être implantée sur le terminal mobile (dans une mémoire de ce terminal) ou être accessible à distance depuis le terminal mobile via un réseau 10 reliant la base de données au terminal mobile. Ces bases BD1, BD2 peuvent être combinées en une seule et même base reliée au module de génération de rapport.

Idéalement, le module de reconnaissance optique de caractères OCR peut être agencé pour détecter dans l'image acquise, la page courante affichée sur ledit au moins un écran d'affichage de l'aéronef et pour commander l'émission d'une instruction à l'attention de l'intervenant une fois qu'une image d'une page attendue suivant le scénario a bien été acquise. On a ainsi un guidage contextuel de l'intervenant pour le guider dans la sélection et l'acquisition des images.

Le module de génération de rapport est tel que le rapport électronique 6 signé qu'il génère contient une signature électronique propre à l'intervenant OP. Ce rapport signé peut être sous format PDF ou tout autre format transmissible sans dégradation du rapport et blocable en écriture pour le rendre infalsifiable.

Préférentiellement la signature électronique comporte une information d'identification de l'intervenant telle que sa photo prise au moment de la signature et/ou une signature manuelle et/ou vocale et/ou électronique via mot de passe donné par l'intervenant. Cette information peut être insérée dans le rapport signé pour authentifier le lien entre l'intervenant et le rapport finalisé.

La génération du rapport peut comprendre, en plus de la signature du rapport, une étape préalable de visualisation des données contenues dans le rapport prêt à signer et une ou plusieurs étapes de validation de ces données, la signature étant réalisée après les étapes de validation. On note que le rapport est régulièrement enregistré sur le terminal et/ou sur un serveur distant à différents stades de son élaboration.

La signature du rapport peut comprendre l'usage d'une clé privée à partir de laquelle est générée la signature, cette signature étant préférentiellement conditionnée par une authentification biométrique préalable de l'intervenant ; La clef privée peut être stockée dans le terminal ou dans un support de clef distinct du terminal et lisible par ce dernier. Ainsi le terminal peut être utilisé par plusieurs intervenants sans avoir à stocker la clef privée de chaque intervenant dans le terminal. Ceci facilite l'usage et la portabilité du terminal mobile.

Le rapport peut éventuellement contenir des informations relatives à son élaboration comme l'heure de commencement du rapport, l'heure de signature du rapport finalisé.

Le rapport électronique 6 généré selon le procédé de l'invention combine, en un même rapport, validé par l'intervenant :
- des données opérationnelles 3 propres à un aéronef 1 (il s'agit des données obtenues par lecture de l'écran 2) ;
- une information d'identification ID / de configuration de l'aéronef obtenue grâce au dispositif d'acquisition d'information ; et
- une information d'identification de l'intervenant OP ayant généré le rapport 6, cette information étant associée à la signature propre à l'intervenant (la signature peut se faire par validation du rapport via une touche de validation après vérification de l'identité de l'intervenant par exemple via une analyse biométrique d'une image du visage de l'intervenant acquise au moment de la signature).

Nous allons maintenant expliquer la chronologie de mise en œuvre du procédé selon l'invention.
La figure 1 correspond à un moment en fin de vol, où l'hélicoptère est posé et où le pilote a éteint les moteurs. Le VEMD affiche alors automatiquement les données de fin du vol sur son écran 2. Des exemples de pages P1, P2 affichées sont illustrées à droite de la figure 1. Ces pages présentent chacune des données opérationnelles 3 de l'aéronef.
La figure 2 illustre le moment ou l'intervenant OP, en l'occurrence le pilote, lance l'application d'acquisition de données (aussi appelé module de génération de rapport) sur son smartphone ou bien sur sa tablette tactile (matériel du commerce standard) et démarre la fonction de collecte de données conforme au procédé de l'invention. Il va maintenant pouvoir récupérer des données 3 de vol.

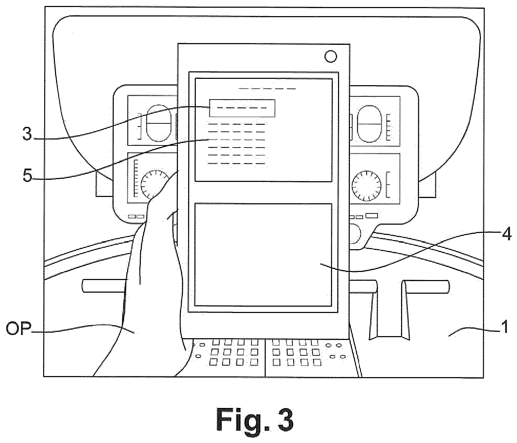

La figure 3 illustre le moment ou l'application du terminal affiche, en temps réel, via un écran d'affichage 9 du terminal 4 ce que capte le capteur d'acquisition d'image (la caméra arrière du terminal). Un bouton tactile permet à l'intervenant de commander l'acquisition des images qui l'intéressent.

En l'occurrence, le pilote utilise l'application pour prendre en photo les différents écrans 2 du VEMD pour faire l'acquisition des données affichées 3.

Dans un mode de réalisation particulier, lors de cette première acquisition d'image de la figure 3, l'OCR peut reconnaître dans l'image acquise de l'écran 2 l'information d'identification ID de l'aéronef et/ou l'information de configuration de l'aéronef.

Les figures 4a et 4b illustrent deux modes de réalisation alternatifs qui correspondent au moment où le pilote utilise l'application pour identifier une information d'identification ID de l'aéronef et éventuellement certaines données opérationnelles figées comme la configuration matérielle de l'aéronef. Soit, comme sur la figure 4a, l'intervenant obtient cette information via une photo d'étiquettes collées à cette attention sur le Tableau de Bord (QRCode par exemple), soit, comme sur la figure 4b, l'intervenant obtient cette information par lecture d'étiquette(s) électronique sans contact (par exemple NFC) passive(s).

Les deux technologies employées sont passives et n'impactent pas la navigabilité de l'aéronef. Elles sont aussi issues du grand public et ne nécessitent d'évolution matérielle spécifique de l'aéronef.

Une fois cette information d'identification ID et/ou de configuration d'aéronef acquise et éventuellement après vérification de cet identifiant de l'aéronef et/ou de cette configuration et/ou d'une correspondance entre cet identification ID et la configuration, le terminal via son module de génération de rapport peut rechercher dans une base de données BD1 un modèle de rapport correspondant à cet aéronef (c'est-à-dire un modèle de rapport correspondant à l'identifiant de l'aéronef et/ou à sa configuration) et rechercher dans une base de données BD2, un scénario de collecte de données propre à cet aéronef.

L'intervenant, conformément au scenario de collecte actionne les moyens de sélection pour faire défiler des pages P1, P2 sur les écrans de l'aéronef et il en acquiert des images.

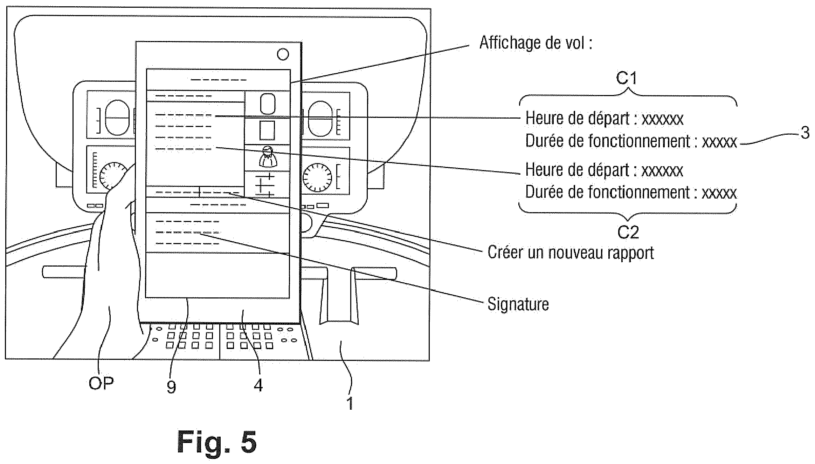

La figure 5 illustre le moment où, pour chaque page ainsi acquise, conformément au modèle de rapport prédéterminé, l'application utilise la reconnaissance de caractères (OCR ayant bénéficié d'un apprentissage des caractères spécifiques du VEMD et du contenu spécifique des pages « Rapport de Vol du VEMD ») pour extraire des chaînes de caractères C1, C2 représentatives des données des photos ainsi réalisées. L'application renseigne automatiquement le Rapport de Vol Electronique. Le pilote doit contrôler ce qui est reconnu par l'OCR sur l'affichage de la tablette 4, néanmoins, la photo source de l'OCR est conservée comme preuve et insérée dans le rapport.

La figure 6 illustre un exemple de page de rapport électronique 6 ainsi générée. Le pilote vérifie les pages de ce rapport puis démarre la fonction de signature du rapport.

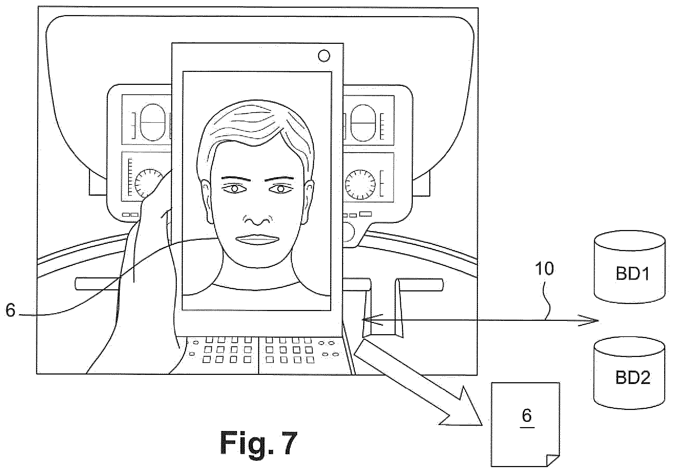

La figure 7 illustre le moment où l'application affiche une interface de type appareil photo (affichage en temps réel de ce que capte la caméra avant et un boutons tactiles d'interface utilisateur) avec des instructions propres à l'authentification biométrique.

Une fois l'authentification confirmée, le rapport 6 est signé numériquement puis stocké et éventuellement transmis via un réseau 10.

La photo ayant fait l'objet du traitement d'authentification faciale est conservée et affichée en encart pour preuve sur le rapport de vol pdf numériquement signé 6.

En résumé, le procédé de collecte de données 3 selon l'invention facilite la génération par l'intervenant OP d'un rapport électronique 6 dont les informations sont entrées de manière sécurisée sur le lieu même de l'aéronef 1, alors que l'intervenant OP a les écrans 2 de l'aéronef sous les yeux.

Selon un mode particulier, la génération du rapport électronique dans un état validé peut être autorisée uniquement si ce rapport a été émis dans un lapse de temps prédéterminé, par exemple en fonction de l'information d'identification de l'aéronef. On peut ainsi allouer un temps prédéterminé à l'intervenant pour réaliser le rapport, ce temps dépendant des particularités de l'aéronef.

Si le rapport est terminé et signé dans ce lapse de temps, on sait que les chances que l'intervenant ait falsifié le rapport sont particulièrement réduites. Le rapport est alors mis à l'état validé.

Dans le cas contraire, si le temps de génération du rapport s'avère supérieur au lapse de temps prédéterminé alors on peut ne pas autoriser le passage du rapport dans un état validé car il y a des chances que ce rapport contienne des données / informations éparses / non cohérentes entre elles. Cette information d'état du rapport permet d'attirer l'attention lorsque la durée d'élaboration du rapport électronique semble anormalement longue.

On a ainsi une acquisition automatique des données 3 / informations ID par le terminal mobile 4, une vérification humaine réalisée par l'intervenant sur le lieu de l'aéronef 1 et enfin une signature par l'intervenant OP permettant de générer le rapport définitif 6 intégrant les données d'identification de l'intervenant OP. Les données d'identification de l'intervenant peuvent comprendre sa signature manuelle ou biométrique (par exemple reconnaissance d'empreinte tactiles, palmaire, faciale, iris, vocale, ...) complété d'une validation manuelle (par appui sur un bouton contextuel de validation) ou vocale (par prononciation d'un ordre vocal de validation de rapport).

Cette chaîne d'acquisition de données / informations est ainsi particulièrement sécurisée.

## Revendications

1. Procédé de collecte de données opérationnelles d'un aéronef (1), cet aéronef comportant au moins un écran d'affichage (2) de données opérationnelles (3) de l'aéronef, le procédé étant **caractérisé en ce que** :
- à l'aide d'un terminal mobile (4) doté d'au moins un capteur optique, on réalise l'acquisition d'images (5) dudit au moins un écran d'affichage (2) de manière à ce que certaines au moins des images acquises représentent des données opérationnelles affichées sur l'écran d'affichage ;
- à l'aide d'un module de reconnaissance optique de caractères (OCR) associé audit terminal mobile (4), on identifie dans les images acquises (5) des chaînes de caractères (C1, C2) chacune représentative d'une desdites données opérationnelles (3) affichées sur l'écran d'affichage (2) ;
- à l'aide d'un module de génération de rapport et desdites chaînes de caractères identifiées (C1, C2), on génère un rapport électronique (6) contenant certaines au moins desdites données opérationnelles (3) de l'aéronef (1) ;
le terminal mobile étant relié fonctionnellement à une base de données (BD1) contenant plusieurs modèles de rapports électroniques prédéterminés, chaque modèle donné de rapport prédéterminé correspondant à un type d'aéronef donné lui-même identifiable via l'information d'identification de cet aéronef, le module de génération de rapport étant agencé pour qu'à réception de l'information d'identification (ID) de l'aéronef dont on veut collecter des données, il obtient de la base de données (BD1) un modèle donné de rapport électronique correspondant à cet aéronef, le rapport électronique généré (6) par le module de génération de rapport étant généré à partir du modèle de rapport obtenu de la base de données (BD1).

2. Procédé de collecte de données selon la revendication 1, dans lequel ledit terminal mobile (1) comporte un dispositif d'acquisition d'au moins une information d'identification (ID) de l'aéronef portée par l'aéronef, le module de génération de rapport étant agencé pour que le rapport électronique (6) qu'il génère, associe au moins une information d'identification (ID) de l'aéronef avec les données opérationnelles (3) de l'aéronef contenues dans le rapport.

3. Procédé de collecte de données selon la revendication 2, dans lequel on réalise successivement l'acquisition de données opérationnelles délivrées via ledit écran et d'au moins une information d'identification de l'aéronef acquise à l'aide dudit dispositif d'acquisition, cette information d'identification étant une information d'identité de l'aéronef, ainsi qu'une ou plusieurs informations de configuration de l'aéronef et on mémorise ces données opérationnelles et informations d'identification acquise successivement dans le même rapport électronique.

4. Procédé de collecte selon la revendication 3, dans lequel successivement à ladite acquisition desdites données opérationnelles et de ladite au moins une information d'identification de l'aéronef, on réalise l'acquisition d'une image d'intervenant utilisant le terminal mobile (4) et on mémorise cette image d'intervenant dans ledit rapport électronique.

5. Procédé de collecte de données selon l'une quelconque des revendication 2 à 4, dans lequel l'information d'identification (ID) de l'aéronef est inscrite sur un support d'informations porté par l'aéronef, ce support étant choisi parmi une marque d'identification ou un cryptogramme visuel (7) ou une étiquette (8) dotée de moyens de communication en champ-proche ou un cryptogramme optique affiché sur un écran.

6. Procédé de collecte de données selon l'une des revendications 1 à 5, dans lequel ledit terminal mobile (4) comporte un écran de visualisation (9) agencé pour d'une part visualiser les images acquises (5) par le capteur optique pendant cette acquisition et pour d'autre part afficher le rapport électronique (6) à l'attention d'un intervenant (OP), le terminal mobile (4) comportant également des moyens de signature pour permettre à l'intervenant visualisant le rapport électronique de le signer si ce rapport lui convient, ce rapport électronique (6) signé contenant une signature électronique propre à l'intervenant (OP).

7. Procédé de collecte de données selon la revendication 6, dans lequel les moyens de signature sont associés à un dispositif d'authentification biométrique de l'intervenant, la signature du rapport électronique par l'intervenant étant autorisée uniquement si cet intervenant a été préalablement identifié par le dispositif d'authentification biométrique.

8. Procédé de collecte de données selon l'une quelconque des revendications 1 à 7, dans lequel l'aéronef comporte des moyens de sélection, parmi un ensemble prédéterminé de pages affichables (P1, P2), de la page à afficher sur ledit au moins un écran d'affichage (2) de l'aéronef (1), chaque page donnée affichée (P1, P2) contenant un jeu de données opérationnelles (3) de l'aéronef, le terminal mobile (4) étant relié à une base de données (BD2) de scénarios de collecte de données (3), chaque scénario de collecte donné de cette base correspondant à un type d'aéronef donné lui-même identifiable via l'information d'identification (ID) de cet aéronef, le module de génération de rapport étant agencé pour qu'à réception de l'information d'identification (ID) de l'aéronef dont on veut collecter des données (3), il obtient de la base de données un scénario de collecte de données correspondant à cet aéronef et, en réponse à ce scénario de collecte, il émet des instructions à l'attention de l'intervenant (OP) pour que cet intervenant sélectionne la page à afficher sur ledit au moins un écran d'affichage (2) de l'aéronef et qu'il réalise l'acquisition d'une image de cette page (P1, P2) affichée sur l'écran.

9. Procédé de collecte de données selon la revendication 8, dans lequel l'aéronef comporte plusieurs écrans d'affichage pour afficher lesdites données opérationnelles de l'aéronef, le scénario de collecte de données correspondant à cet aéronef lorsqu'exécuté par le module de génération de rapport émettant des instructions d'acquisition d'images de chacun de ces écrans l'un après l'autre.

10. Procédé de collecte de données selon l'une quelconque des revendications 8 ou 9, dans lequel le module de reconnaissance optique de caractères (OCR) est agencé pour détecter dans l'image acquise la page courante affichée sur ledit au moins un écran d'affichage de l'aéronef et pour commander l'émission d'une instruction à l'attention de l'intervenant une fois qu'une image d'une page attendue suivant le scénario a bien été acquise.

## Patentansprüche

1. Verfahren zum Sammeln von Betriebsdaten eines Luftfahrzeugs (1), wobei dieses Luftfahrzeug mindestens einen Anzeigebildschirm (2) zum Anzeigen von Betriebsdaten (3) des Luftfahrzeugs umfasst, wobei das Verfahren **dadurch gekennzeichnet ist, dass**:
- mit Hilfe eines mobilen Terminals (4), das mit mindestens einem optischen Sensor ausgestattet ist, die Aufnahme von Bildern (5) des genannten mindestens einen Anzeigebildschirms (2) derart durchgeführt wird, dass zumindest einige der aufgenommenen Bilder auf dem Anzeigebildschirm angezeigte Betriebsdaten darstellen;
- mit Hilfe eines Moduls zur optischen Zeichenerkennung (OCR), das mit dem genannten mobilen Terminal (4) verbunden ist, in den aufgenommenen Bildern (5) Zeichenketten (C1, C2) identifiziert werden, die jeweils repräsentativ für ein Betriebsdatenelement der genannten auf dem Anzeigebildschirm (2) angezeigten Betriebsdaten sind;
- mit Hilfe eines Berichterzeugungsmoduls und der genannten identifizierten Zeichenketten (C1, C2) ein elektronischer Bericht (6) erzeugt wird, der zumindest einige der genannten Betriebsdaten (3) des Luftfahrzeugs (1) enthält;
wobei das mobile Terminal funktionell mit einer Datenbank (BD1) verbunden ist, die mehrere Vorlagen von vorbestimmten elektronischen Berichten enthält, wobei jede gegebene Vorlage eines vorbestimmten Berichts einem gegebenen Luftfahrzeugtyp entspricht, der selbst über die Identifizierungsinformation dieses Luftfahrzeugs identifizierbar ist, wobei das Berichterzeugungsmodul so ausgebildet ist, dass es bei Empfang der Identifizierungsinformation (ID) des Luftfahrzeugs, dessen Daten man sammeln will, aus der Datenbank (BD1) eine gegebene Vorlage eines elektronischen Berichts erhält, die diesem Luftfahrzeug entspricht, wobei der von dem Berichterzeugungsmodul erzeugte elektronische Bericht (6) anhand der aus der Datenbank (BD1) erhaltenen Berichtsvorlage erzeugt wird.

2. Verfahren zum Sammeln von Daten nach Anspruch 1, bei dem das genannte mobile Terminal (1) eine Erfassungsvorrichtung zum Erfassen mindestens einer Identifizierungsinformation (ID) des Luftfahrzeugs umfasst, die von dem Luftfahrzeug getragen wird, wobei das Berichterzeugungsmodul so ausgebildet ist, dass der elektronische Bericht (6), den es erzeugt, mindestens eine Identifizierungsinformation (ID) des Luftfahrzeugs mit den in dem Bericht enthaltenen Betriebsdaten (3) des Luftfahrzeugs verbindet.

3. Verfahren zum Sammeln von Daten nach Anspruch 2, bei dem nacheinander die Erfassung von Betriebsdaten, die über den genannten Bildschirm geliefert werden, und mindestens einer Identifizierungsinformation des Luftfahrzeugs, die mit Hilfe der Erfassungsvorrichtung erfasst wird, durchgeführt wird, wobei diese Identifizierungsinformation eine Identitätsinformation des Luftfahrzeugs ist, sowie eine oder mehrere Konfigurationsinformationen des Luftfahrzeugs, und diese Betriebsdaten und die Identifizierungsinformationen, die nacheinander erfasst werden, in demselben elektronischen Bericht gespeichert werden.

4. Verfahren zum Sammeln nach Anspruch 3, bei dem nach der genannten Erfassung der genannten Betriebsdaten und der genannten mindestens einen Identifizierungsinformation des Luftfahrzeugs die Aufnahme eines Bildes eines Intervenienten durchgeführt wird, der das mobile Terminal (4) nutzt, und dieses Bild des Intervenienten in dem genannten elektronischen Bericht gespeichert wird.

5. Verfahren zum Sammeln von Daten nach einem der Ansprüche 2 bis 4, bei dem die Identifizierungsinformation (ID) des Luftfahrzeugs in einen Informationsträger eingeschrieben ist, der von dem Luftfahrzeug getragen wird, wobei dieser Träger unter einer Identifizierungsmarke oder einem visuellen Kryptogramm (7) oder einem Tag (8), das mit Nahfeld-Kommunikationsmitteln ausgestattet ist, oder einem optischen Kryptogramm, das auf einem Bildschirm angezeigt wird, ausgewählt wird.

6. Verfahren zum Sammeln von Daten nach einem der Ansprüche 1 bis 5, bei dem das genannte mobile Terminal (4) einen Visualisierungsbildschirm (9) umfasst, der so ausgebildet ist, dass er einerseits die von dem optischen Sensor während dieser Aufnahme aufgenommenen Bilder (5) visualisiert und andererseits den elektronischen Bericht (6) für einen Intervenienten (OP) anzeigt, wobei das mobile Terminal (4) ferner Signaturmittel umfasst, um dem Intervenienten, der den elektronischen Bericht visualisiert, zu ermöglichen, ihn zu unterzeichnen, wenn ihm dieser Bericht zusagt, wobei dieser unterzeichnete elektronische Bericht (6) eine elektronische Signatur enthält, die dem Intervenienten (OP) zu eigen ist.

7. Verfahren zum Sammeln von Daten nach Anspruch 6, bei dem die Signaturmittel einer Vorrichtung zur biometrischen Authentifizierung des Intervenienten verbunden sind, wobei die Signatur des elektronischen Berichts durch den Intervenienten nur autorisiert wird, wenn dieser Intervenient zuvor von der Vorrichtung zur biometrischen Authentifizierung identifiziert wurde.

8. Verfahren zum Sammeln von Daten nach einem der Ansprüche 1 bis 7, bei dem das Luftfahrzeug Auswahlmittel umfasst, um unter einer vorbestimmten Gruppe von anzeigbaren Seiten (P1, P2) die auf dem genannten mindestens einen Anzeigebildschirm (2) des Luftfahrzeugs (1) anzuzeigende Seite auszuwählen, wobei jede gegebene angezeigte Seite (P1, P2) einen Satz von Betriebsdaten (3) des Luftfahrzeugs enthält, wobei das mobile Terminal (4) mit einer Datenbank (BD2) mit Datensammelszenarien (3) verbunden ist, wobei jedes gegebene Sammelszenario dieser Datenbank einem gegebenen Luftfahrzeugtyp entspricht, der selbst über die Identifizierungsinformation (ID) dieses Luftfahrzeugs identifizierbar ist, wobei das Berichterzeugungsmodul so ausgebildet ist, dass es bei Empfang der Identifizierungsinformation (ID) des Luftfahrzeugs, dessen Daten (3) man sammeln möchte, aus der Datenbank ein Datensammelszenario erhält, das diesem Luftfahrzeug entspricht, und in Antwort auf dieses Sammelszenario Anweisungen für den Intervenienten (OP) aussendet, damit dieser Intervenient die auf diesem mindestens einen Anzeigebildschirm (2) des Luftfahrzeugs anzuzeigende Seite auswählt und die Aufnahme eines Bildes dieser auf dem Bildschirm angezeigten Seite (P1, P2) durchführt.

9. Verfahren zum Sammeln von Daten nach Anspruch 8, bei dem das Luftfahrzeug mehrere Anzeigebildschirme umfasst, um die genannten Betriebsdaten des Luftfahrzeugs anzuzeigen, wobei das Datensammelszenario, das diesem Luftfahrzeug entspricht, wenn es von dem Berichterzeugungsmodul ausgeführt wird, Bildaufnahmeanweisungen für jeden dieser Bildschirme nacheinander erteilt.

10. Verfahren zum Sammeln von Daten nach einem der Ansprüche 8 oder 9, bei dem das Modul zur optischen Zeichenerkennung (OCR) so ausgebildet ist, dass es in dem aufgenommenen Bild die auf dem genannten mindestens einen Anzeigebildschirm des Luftfahrzeugs angezeigte aktuelle Seite erfasst und das Erteilen einer Anweisung an den Intervenienten anordnet, sobald ein Bild einer gemäß dem Szenario erwarteten Seite aufgenommen worden ist.

## Claims

1. Method for collecting operational data from an aircraft (1), this aircraft comprising at least one display screen (2) for operational data (3) of the aircraft, the method being **characterized in that**:
- using a mobile terminal (4) equipped with at least one optical sensor, images (5) of said at least one display screen (2) are acquired in such a way that at least some of the acquired images represent operational data displayed on the display screen;
- using an optical character recognition (OCR) module associated with said mobile terminal (4), character strings (C1, C2) each representative of one piece of said operational data (3) displayed on the display screen (2) are identified in the acquired images (5);
- using a report generation module and said identified character strings (C1, C2), an electronic report (6) is generated containing at least some of said operational data (3) of the aircraft (1);
the mobile terminal being functionally linked to a database (BD1) containing several predetermined electronic report templates, each predetermined report template corresponding to a given aircraft type itself identifiable via the identification information of that aircraft, the report generation module being arranged so that upon receipt of the identification information (ID) of the aircraft of which data is to be collected, it obtains from the database (BD1) a given electronic report template corresponding to that aircraft, the electronic report generated (6) by the report generation module being generated from the report template obtained from the database (BD1).

2. The method for collecting data according to claim 1, wherein said mobile terminal (1) includes a device for acquiring at least one aircraft identification information (ID) carried by the aircraft, the report generation module being arranged so that the electronic report (6) generated by it associates at least one aircraft identification information (ID) with the aircraft's operational data (3) contained in the report.

3. The method for collecting data according to claim 2, in which the acquisition of operational data delivered via said screen and of at least one aircraft identification information are successively carried out using said acquisition device, said identification information being aircraft identifying information, as well as one or more aircraft configuration information, and these operational data and identification information successively acquired are stored in the same electronic report.

4. The method for collecting data according to claim 3, in which, after said acquisition of said operational data and said at least one aircraft identification information, an image of the operator is acquired using the mobile terminal (4), this image being stored in said electronic report.

5. The method for collecting data according to any of claims 2 to 4, wherein the aircraft identification information (ID) is written on an information medium carried by the aircraft, this medium being selected from an identification mark or visual cryptogram (7) or a tag (8) with near-field communication means or an optical cryptogram displayed on a screen.

6. The method for collecting data according to one of claims 1 to 5, wherein said mobile terminal (4) includes a display screen (9) arranged to display the images (5) acquired by the optical sensor during this acquisition and to display the electronic report (6) to an operator (OP), the mobile terminal (4) also including signature means to allow the operator viewing the electronic report to sign it he/she is satisfied with the report, said signed electronic report (6) containing an electronic signature specific to the operator (OP).

7. The method for collecting data according to claim 6, in which the signature means are associated with a biometric authentication device of the operator, the signature of the electronic report by the operator being authorized only if said operator has been previously identified by the biometric authentication device.

8. The method for collecting data according to any of claims 1 to 7, wherein the aircraft has means for selecting, from a predetermined set of displayable pages (P1, P2), the page to be displayed on said at least one display screen (2) of the aircraft (1), each given displayed page (P1, P2) containing an aircraft operational data set (3), the mobile terminal (4) being linked to a database (DB2) of data collection scenarios (3), each given collection scenario in this database corresponding to a given aircraft type itself identifiable via the identification information (ID) of this aircraft, the report generation module being arranged so that upon receipt of the identification information (ID) of the aircraft from which data (3) are to be collected, it obtains from the database a data collection scenario corresponding to that aircraft and, in response to that collection scenario, it issues instructions to the operator (OP) to select the page to be displayed on the at least one aircraft display screen (2) and to acquire an image of that page (P1, P2) displayed on the screen.

9. The method for collecting data according to claim 8, wherein the aircraft has a plurality of display screens for displaying said aircraft operational data, the data collection scenario corresponding to that aircraft when executed by the report generation module issuing image acquisition instructions for each of these screens one after the other.

10. The method for collecting data according to any of claims 8 or 9, wherein the optical character recognition (OCR) module is arranged to detect in the acquired image the current page displayed on said at least one aircraft display screen and to issue an instruction to the operator once an image of a page expected in accordance with the scenario has been acquired.
